(19) Europäisches Patentamt

European Patent Office

Office européen des brevets

(11) **EP 1 086 729 A2**

(12) **EUROPEAN PATENT APPLICATION**

(43) Date of publication:
28.03.2001 Bulletin 2001/13

(51) Int. Cl.⁷: $A63F\ 13/10$

(21) Application number: 00120775.2

(22) Date of filing: 22.09.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 24.09.1999 JP 27052599

(71) Applicant: **Konami Corporation Minato-ku, Tokyo (JP)**

(72) Inventors:
• **Kukino, Masaaki**
**Minato-ku, Tokyo (JP)**
• **Nakagawa, Shinichi**
**Minato-ku, Tokyo (JP)**
• **Niihama, Naoki**
**Minato-ku, Tokyo (JP)**
• **Saito, Yoshinobu**
**Minato-ku, Tokyo (JP)**

(74) Representative:
**Müller-Boré & Partner**
**Patentanwälte**
**Grafinger Strasse 2**
**81671 München (DE)**

(54) **Shooting video game system and image displaying method in shooting video game**

(57) A shooting video game system comprises: main display control means for displaying a game image including models, i.e., enemy character, within a range of a specified angle of view on the main monitor; auxiliary display control means for displaying on the auxiliary monitor provided in the simulated gun a portion of the game image including a part at which the simulated gun is aimed within a range of an angle of view smaller than the specified angle of view; display mode storage means for storing at least one display mode different from a usual display mode used for the display on the main monitor as a display mode for the enemy character; and change display control means for displaying the enemy character in the different display mode on the auxiliary monitor when an instruction is given by the change instructing means.

FIG.10

EP 1 086 729 A2

## Description

The present invention relates to an image displaying technique in a shooting video game in which an enemy character displayed on a display means is shot by a simulated gun from a position facing the display means.

## BACKGROUND OF THE INVENTION AND RELATED ART STATEMENT

There have been known a shooting video game systems which are provided with a main monitor for displaying an enemy character as a target and a simulated gun having a trigger for discharging a simulated bullet toward the main monitor and are constructed such that the simulated bullet propagates in a specified direction in an image displayed on the main monitor by pulling the trigger of the simulated gun, and the enemy character is destroyed on a game screen or disappears from the game screen when the simulated bullet hits him. In some of such shooting video game systems having been put to practical use, a small-size auxiliary monitor is provided in a sighting device of the simulated gun in addition to the main monitor, and a part of a set game image in a range having a smaller angle of view than the main monitor is displayed on this auxiliary monitor so that a game player can easily see the enemy character.

In the case that a game image is displayed on two monitors as in the conventional shooting video game system, however, the display modes of the game image on the two monitors are basically the same.

## SUMMARY OF THE INVENTION

In view of the above consideration, an object of the present invention is to provide a shooting video game system which can display a variety of game images by displaying an enemy character on two monitors in different display modes and also an image displaying method in a shooting video game.

In order to fulfil the above object, this invention is directed to a shooting video game system for shooting an enemy character displayed on a main monitor by a simulated gun from a position facing the main monitor. The invented shooting video game system, according to the invention, comprises: main display control means for displaying a game image set in a virtual 3D space within a range of a specified angle of view on the main monitor, said game image comprised of models including an enemy character; an auxiliary monitor provided in a gunsight of the simulated gun; auxiliary display control means for displaying on the auxiliary monitor a portion of the game image including a part at which the simulated gun is aimed within a range of an angle of view smaller than the specified angle of view; display mode storage means for storing at least one display mode different from a usual display mode used for the display on the main monitor as a display mode for the enemy character; change instructing means for instructing a change of the display mode of the enemy character on the auxiliary monitor to the different display mode; and change display control means for displaying the enemy character in the different display mode on the auxiliary monitor when an instruction is given by the change instructing means.

These and other objects, features and advantages of the present invention will become more apparent upon a reading of the following detailed description and accompanying drawings.

## BRIEF DESCRIPTION OF THE DRAWINGS

FIG. 1 is a perspective view showing the external configuration of one embodiment of a shooting video game system according to the invention,
FIGS. 2A and 2B show the construction of a simulated gun, wherein FIG. 2A is a side view partly in section of the simulated gun and FIG. 2B is a diagram showing an aiming direction detector,
FIG. 3 is a diagram showing a display screen of a main monitor in one scene of a game,
FIG. 4 is a diagram showing a display screen of an auxiliary monitor in one scene of the game,
FIG. 5 is a diagram showing the display screen of the auxiliary monitor in another scene of the game,
FIG. 6 is a block diagram showing the electrical construction of the video game system and function blocks of a controller,
FIG. 7 is a polygon mesh representation showing a polygon set constructing a human character model,
FIG. 8 is a polygon mesh representation showing another polygon set constructing the human character model,
FIG. 9 is a polygon mesh representation showing still another polygon set constructing the human character model,
FIG. 10 is a diagram showing an enemy character model displayed on the auxiliary monitor in a different display mode,
FIG. 11 is a diagram showing an enemy character model displayed on the auxiliary monitor in another different display mode,
FIG. 12 is a diagram used to explain selection of a polygon set,
FIG. 13 is a diagram showing one example of the display screen on the main monitor when an instruction is given by a change instructing means,
FIG. 14 is a diagram showing another example of the display screen on the main monitor when an instruction is given by the change instructing means,
FIG. 15 is a flow chart showing an operation procedure of selecting a polygon set, and

FIG. 16 is a flow chart showing an instruction procedure by the change instructing means.

DETAILED DESCRIPTION OF THE PREFERRED EMBODIMENTS OF THE INVENTION

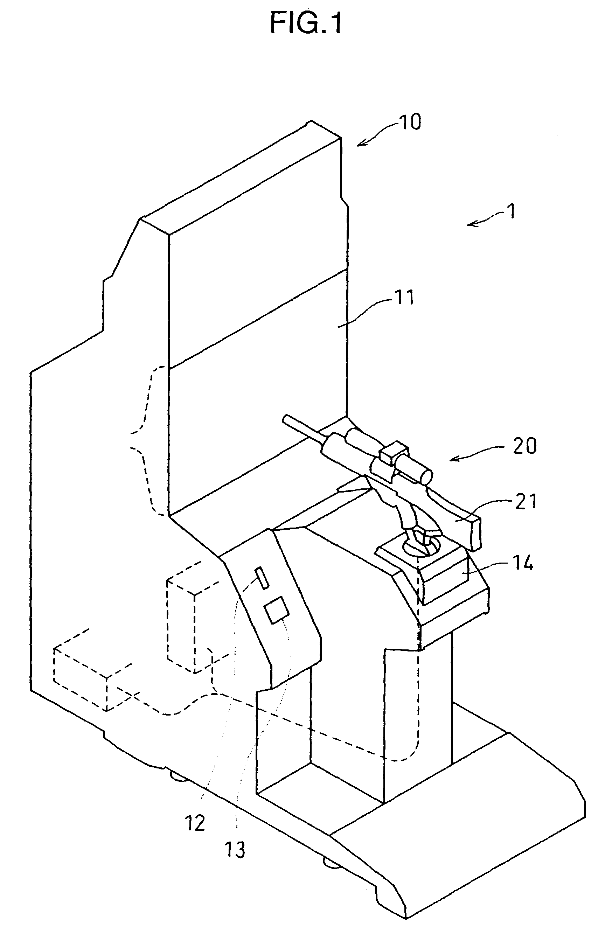

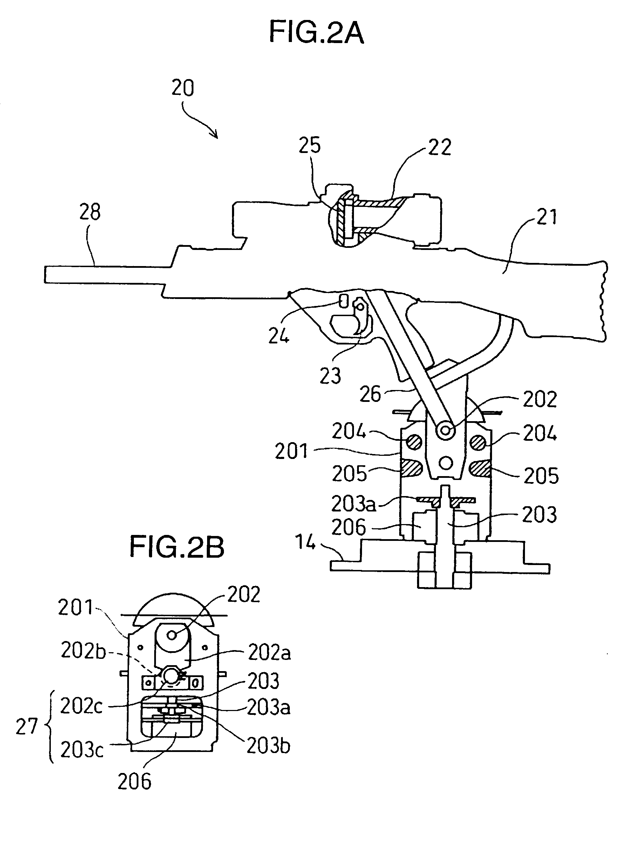

FIG. 1 is a perspective view showing the external configuration of one embodiment of a shooting video game system according to the invention, and FIGS. 2A and 2B show the construction of a simulated gun, wherein FIG. 2A is a side view partly in section of the simulated gun and FIG. 2B is a diagram showing an aiming direction detector.

As shown in FIG. 1, a video game system 1 according to this embodiment is comprised of a main game unit 10 and a simulated gun 20.

The main game unit 10 is provided with a main monitor 11 made of a CRT or PDP, a coin slot 12 through which a coin is inserted by a game player, and a start switch 13 operable by the game player. The main monitor 11 is arranged such that its center is substantially at the same level as a position slightly below the eyes of a standing person having an average height.

The simulated gun 20 is opposed substantially to the center of the main monitor 11 and is installed on a base 14 of the main game unit 10 spaced apart from the main monitor 11 by a specified distance. The simulated gun 20 is, as shown in FIG. 2A, provided with a main gun unit 21, a cylindrical gunsight 22 disposed on the main gun unit 21, a trigger 23 disposed below the main gun unit 21 and a micro-switch 24.

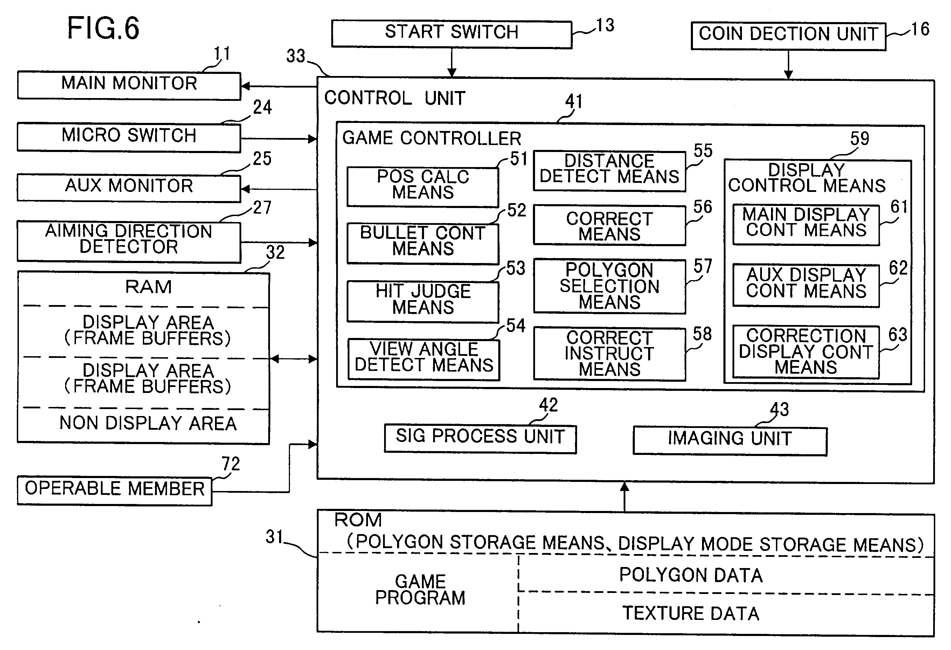

The main gun unit 21 is so mounted as to be vertically pivotal and horizontally rotatable. An auxiliary monitor 25 whose display surface is faced backward is arranged in the gunsight 22. The auxiliary monitor 25 is made of, for example, a liquid crystal display panel. The micro-switch 24 is provided in such a position that, when one end of the trigger 23 is pulled, the other end thereof is brought into contact with the micro-switch 24 to turn it on. When being turned on, the micro-switch 24 sends a trigger signal to a control unit 33 (see FIG. 6).

A mounting construction of the main gun unit 21 and the aiming direction detector are described with reference to FIGS. 2A and 2B. The main gun unit 21 is mounted on a mount portion 201 fixed to the base 14. Specifically, the main gun unit 21 is made vertically pivotal about a horizontal shaft 202 by mounting the leading end of an extending member 26 extending from the main gun unit 21 on the horizontal shaft 202 and also made horizontally rotatable about a vertical shaft 203 by mounting the horizontal shaft 202 on the vertical shaft 203. A vertical pivotal range of the main gun unit 21 is restricted by stoppers 204 projecting from the mount portion 201. A shock created by this restriction is absorbed by shock absorbing rubbers 205 projecting from the mount portion 201. A horizontal rotatable range of the main gun unit 21 is restricted by shock absorbing rubbers (not shown).

In FIG. 2B, a small-diameter gear 202b is in mesh with a fan-shaped gear 202a mounted on the horizontal shaft 202, and a rotatable variable resistor 202c which functions as an angle of elevation sensor is mounted on a rotatable shaft of the gear 202b. The vertical shaft 203 is rotatably supported on a shaft bearing 15 of the base 14, and a rotatable variable resistor 203c which functions as a rotational angle sensor is mounted on a rotatable shaft of a small-diameter gear 203b in mesh with a gear 203a mounted on the vertical shaft 203.

An aiming direction detector 27 is formed by the variable resistors 202c, 203c, which send detection signals of voltage levels corresponding to angles of rotation in the respective directions to the controller 23 (see FIG. 6), thereby making it possible to judge a direction at which a muzzle 28 is aimed at. Instead of the variable resistors, encoders, potentiometers or like devices capable of detecting an angle may be used.

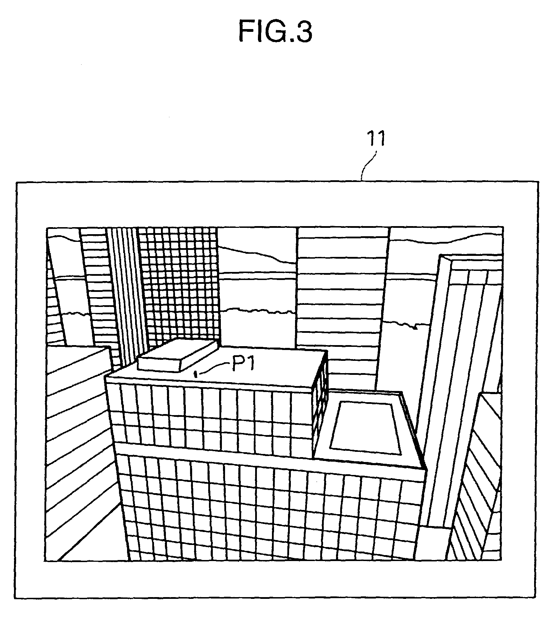

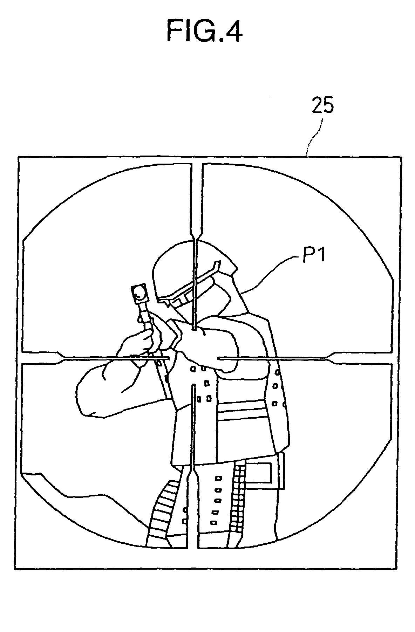

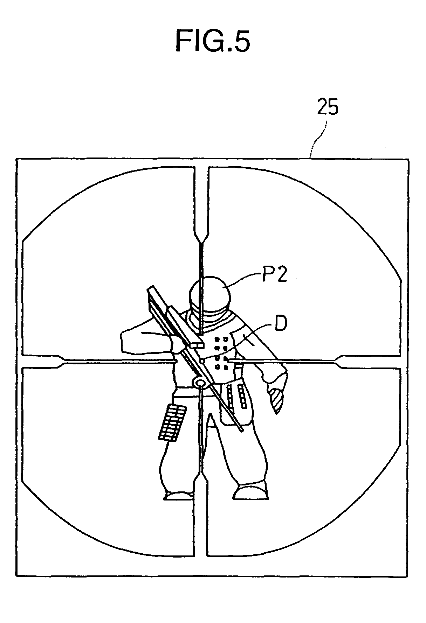

Next, a shooting video game played in this video game system is summarily described with reference to FIGS. 3 to 5. FIGS. 3 and 4 show the same scene of the game, wherein FIG. 3 shows a display screen of the main monitor 11 and FIG. 4 shows a display screen of the auxiliary monitor 25. FIG. 5 is a diagram showing the display screen of the auxiliary monitor 25 in an other scene of the game.

This shooting video game is such that the game player tries to shoot an enemy character P1 by means of the simulated gun (see FIG. 1) with models including buildings displayed as a background image on the main monitor 11 as shown in FIG. 3. In FIG. 3, the scene in which the enemy character P1 hides himself on the roof of a high-rise building is displayed on the main monitor 11. On this screen, a distance between a viewing point (for example, the position of the gunsight 22 of the simulated gun 20 in this embodiment) and the enemy character P1, i.e. a distance set in a virtual three-dimensional (3D) space (game space) in terms of calculation is long, and a range of the game image set in the virtual 3D space which range has a relatively wide angle of view is displayed. Accordingly, recognition can be only made as to whether the enemy character P1 is present or not.

Contrary to this, an enlarged image of a small area including an aimed position of the muzzle 28, i.e. a range of the game image set in the virtual 3D space which range has a narrow angle of view is displayed on the auxiliary monitor 25 as shown in FIG. 4. Such a display makes it possible to easily recognize a state where the enemy character P1 difficult to see on the main monitor 11 is aiming a gun at the game player. In FIG. 4, a cross is displayed in a circular mark to make it understandable that the displayed screen is the screen of the auxiliary monitor 25 in the gunsight 22. FIGS. 3 and 4 show scenes where the enemy character P1 tries to counterattack the game player. FIG. 5 shows a scene immediately after the game player shot an enemy character P2. In FIG. 5, a simulated bullet D flying toward the enemy character P2 is displayed at the cross section in the center.

FIG. 6 is a block diagram showing the electrical construction of the video game system and function blocks of the control unit 33. It should be noted that no description is given on the same elements as those shown in FIG. 1 by identifying them by the same reference numerals.

This video game system is, as shown in FIG. 6, provided with the main monitor 11, the start switch 13, a coin detector 16, the micro-switch 24, the auxiliary monitor 25, the aiming direction detector 27, a ROM 31, a RAM 32 and the control unit 33.

When the start switch 13 is pressed by the game player, a corresponding switch signal is sent to the control unit 33. The coin detector 16 detects a coin inserted through the coin slot 12 (see FIG. 1) and sends a detection signal to the control unit 33.

In the ROM 31 are stored a game program of this video game and various predetermined values set in advance as described later which are part of the game program.

Further, polygon data constructing fixed models such as still enemy characters and building characters, movable models moving on the ground such as car characters, flying models flying in the air such as helicopter characters and airplane characters, and simulated bullets which look as if they were fired from the simulated gun 20 are also stored in the ROM 31 as part of the game program of the video game. Texture data used to image the respective models are also stored in the ROM 31 as part of the game program of the video game.

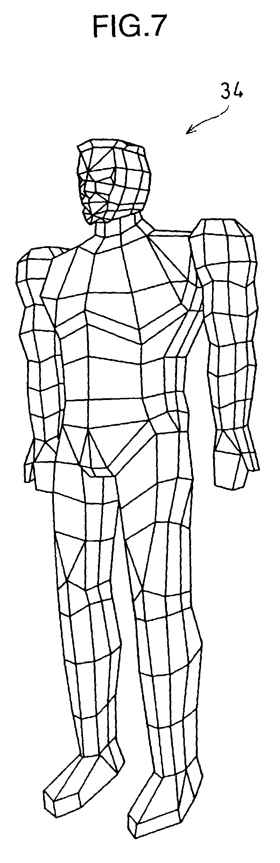

Models are usually formed by a polygon set comprised of a plurality of polygons and imaged by adhering textures to the respective polygons. In this embodiment, first, second and third polygon sets comprised of different numbers of polygons are stored in the ROM 31 as polygon sets for forming the same model (polygon storage means). FIGS. 7 to 9 are polygon mesh representations showing polygon sets forming models representing the same human character (e.g. an enemy character).

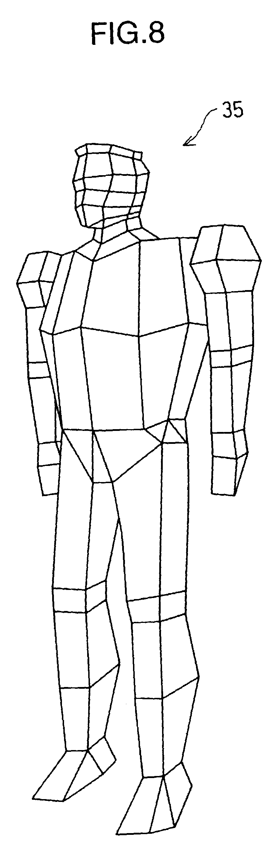

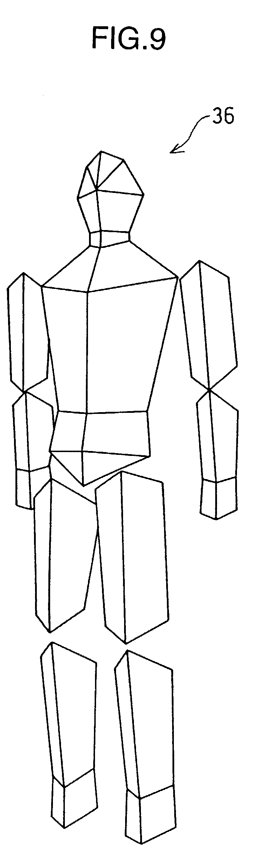

FIG. 7 shows the first polygon set 34 comprised of a largest number (e.g. about 1000 in this embodiment) of polygons, FIG. 8 shows the second polygon set 35 comprised of a smaller number (e.g. about 500 in this embodiment) of polygons, and FIG. 9 shows the third polygon set 36 comprised of an even smaller number (e.g. about 100 in this embodiment) of polygons.

As described later, when this model (human character) is displayed on the respective monitors 11, 25, the first polygon set 34 of FIG. 7 is used if the distance from the viewing point to the enemy character is a short distance; the second polygon set 35 of FIG. 8 is used if the distance from the viewing point to the enemy character is a medium distance; and the third polygon set 36 of FIG. 9 is used if the distance from the viewing point to the enemy character is a long distance. The texture data corresponding to the first to third polygon sets 34 to 36 are stored in the ROM 31.

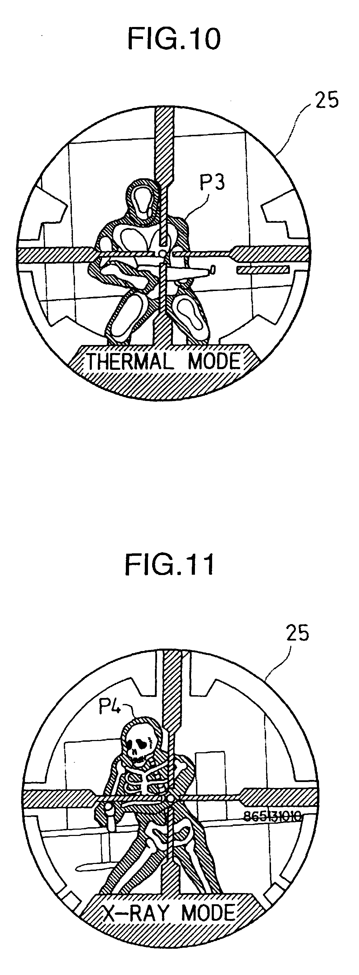

In addition to textures representing a usual display mode, e.g. a display mode of the enemy character P1 as shown in FIG. 4, textures representing different display modes are also stored as a texture data representing the model of the enemy character in the ROM 31 (display mode storage means). FIGS. 10 and 11 are diagrams showing models of enemy characters displayed on the auxiliary monitor 25 in different display modes.

FIG. 10 shows a state where an enemy character P3 is displayed on the auxiliary monitor 25 in a thermographical display mode expressing a scanned image of a human, which would be obtained by a thermograph, in a simulated manner. FIG. 11 shows a state where an enemy character P4 is displayed on the auxiliary monitor 25 in a simulated skeleton display mode expressing a skeleton image of a human, which would be obtained by an X-ray testing apparatus, in a simulated manner. Displays in these different display modes are described later.

Referring back to FIG. 6, the RAM 32 has a non-display area and two display areas (frame buffers). Data read from the ROM 31 and various calculation results are temporarily stored in the non-display area, whereas image data to be displayed on the respective monitors 11, 25 are written in the two display areas. The control unit 33 is comprised of one or more CPUs and an input/output circuit, conducts various calculations in a specified sampling cycle, and displays images on the main monitor 11 and the auxiliary monitor 25 using the calculation results. The control unit 33 is provided with a game control unit 41, a signal processing unit 42, and an imaging unit 43 as function blocks.

The game control unit 41 proceeds the game by generating commands as tasks for imaging in accordance with the game program stored in the ROM 31, ON/OFF signals sent from the micro-switch 24 of the simulated gun 20 and the detection signals sent from the aiming direction detector 27. The game control unit 41 has a function as a coin discriminating means for discriminating whether a coin has been inserted through the coin slot 12 (see FIG. 1) based on whether it has received a detection signal from the coin detector 16, and a function as a start discriminating means for discriminating whether the start switch 13 has been pressed by the game player based on whether it has received a switch signal from the start switch 13.

The signal processing unit 42 conducts calculation of positions of characters and models in the virtual 3D space, calculation for the perspective projection transformation from the position in the virtual 3D space into a position on the plane of the monitor, and a light source calculation. For example, when the simulated bullet fired from the simulated gun 20 is displayed, the signal processing unit 42 conducts a calculation to move a polygon set forming the simulated bullet in accordance with a trajectory simulation set in advance.

The imaging unit 43 forms images on the main monitor 11 and the auxiliary monitor 25 by writing the image data to be formed in the RAM 32 and writing the texture data in the areas of the RAM 32 designated by the polygons in accordance with the calculation results in the signal processing unit 42.

Here, the functions of the game control unit 41, the signal processing unit 42 and the imaging unit 43 are described.

Polygon data defining models, texture data, etc. are stored in correspondence in the RAM 32.

Polygons are polygonal two-dimensional (2D) virtual figures for forming an object, i.e. a model set in the virtual 3D space (game space). In this embodiment, polygons are triangle. Texture data are 2D image data to be adhered to the polygons to form an image.

Imaging commands generated by the game control unit 41 include commands for forming a 3D image using the polygons. Each command for forming a 3D image using the polygons is comprised of polygon apex address data in the display area of the RAM 32, texture address data representing the stored position of the texture data to be adhered to the polygons in the RAM 32, and luminance data representing the luminance data of the textures.

The polygon apex address data in the display area are polygon apex coordinate data in a 2D space obtained by the signal processing unit 42 applying a coordinate transformation and a perspective projection transformation to the polygon apex coordinate data in the 3D space from the game control unit 41 based on a moved amount data and a rotated amount data of the screen itself (viewing point).

The polygon apex address data represent addresses in the display areas of the RAM 32. The imaging unit 43 writes the texture data represented by the texture address data allotted in advance in a range of the display area of the RAM 32 represented by three polygon apex address data. As a result, objects (models) formed by adhering the texture data to a multitude of polygons are displayed on the display surfaces of the main monitor 11 and the auxiliary monitor 25.

Referring back to FIG. 6, the game control unit 41 is further provided with a position calculating means 51, a bullet control means 52, a hit judging means 53, an angle of view detecting means 54, a distance detecting means 55, a correcting means 56, a polygon selecting means 57, a change instructing means 58 and a display control means 59 as function blocks.

The display control means 59 has a function of generating the imaging commands and is provided with a main display control device 61 for generating commands for the main monitor 11, an auxiliary display control device 62 for generating commands for the auxiliary monitor 25, and a change display control device 63 to be described later.

The position calculating means 51 has a function of calculating the position of an intersection of the trajectory of the simulated bullet with the screen of the main monitor 11 when the simulated bullet is fired from the muzzle 28 of the simulated gun 20 in accordance with the detection signal from the aiming direction detector 27. This intersection calculation is carried out frame by frame (e.g. 1/60 sec. in this embodiment) regardless of whether or not the simulated bullet has been fired.

The bullet control means 52 has functions of generating a bullet firing signal every time the trigger 25 is pulled, and, every time this signal is generated, reading the apex coordinate data of the polygons forming the simulated bullet and other data from the ROM 31 and carrying out the trajectory simulation for calculating the trajectory of the simulated bullet fired from the simulated gun 20 frame by frame in accordance with the position of the intersection calculated by the position calculating means 51, the propagating direction of the simulated bullet on the main monitor 11 which is so set in advance as to correspond to the position of the intersection (direction data corresponding to the positions of the intersection are stored in a table format in the ROM 31 in this embodiment) and a speed (e.g. Mach 3) of the simulated bullet set in advance.

In this embodiment, the trajectory simulation is carried out frame by frame for each simulated bullet. The propagating direction of the simulated bullet on the main monitor 11 is set at a depth direction of the game image displayed on the main monitor 11 along a line connecting the position of the intersection and the position of the simulated gun 20.

The hit judging means 53 has a function of judging whether each simulated bullet has hit the model by judging whether the trajectory of each simulated bullet intersects with the model displayed on the main monitor 11. The judgment is made by judging by calculation whether a hit judging surface set for each displayed model and the trajectory data of the simulated bullet intersect in the 3D coordinate systems.

The angle of view detecting means 54 has a function of detecting angles of view of the game images displayed on the main monitor 11 and the auxiliary monitor 25. The distance detecting means 55 has a function of detecting distances from the viewing point to the respective models displayed on the main monitor 11 and the auxiliary monitor 25.

The main display control means 61 and the auxiliary display control means 62 send commands to display images within ranges of preset angles of view from a preset viewing point in the game space set in the virtual 3D space as game images on the main monitor 11 and the auxiliary monitor 25 to the signal processing unit 42 and the imaging unit 43 in accordance with the game program stored in the ROM 31, respectively. The angle of view detecting means 54 detects the angles of view on the respective monitors 11, 25 frame by frame, and the distance detecting means 55 detects the distances from the viewing point to the respective models on the respective monitors 11, 25 frame by frame.

The correcting means 56 has a function of calculating a corrected value L of a distance H according to an angle of view α in accordance with following equation (1):

$$L = H \cdot \tan(\alpha/2)/\tan(\theta/2) \qquad (1)$$

where θ denotes a standard angle of view.

The polygon selecting means 57 has a function of selecting a polygon set used to display the model on the main monitor 11 and the auxiliary monitor 25 from the first to third polygon sets 34 to 36 (see FIGS. 7 to 9) in accordance with the corrected value L. This selection is made by comparing the corrected value with predetermined values L1, L2 (> L1): the first polygon set 34 is selected when L < L1, the second polygon set 35 is selected when L1 ≤ L < L2, and the third polygon set 36 is selected when L2 ≤ L.

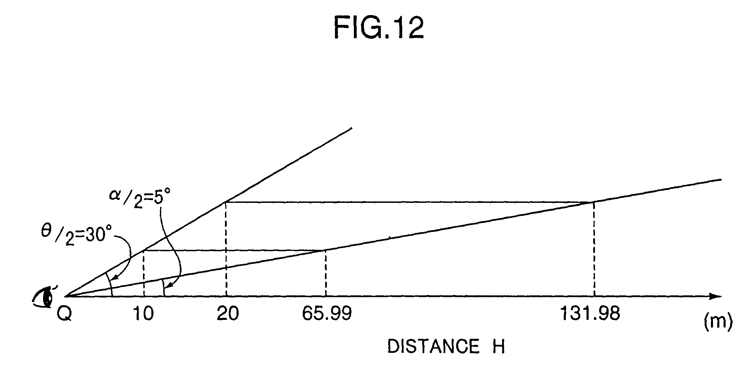

FIG. 12 is a diagram used to explain selection of the polygon set. In this embodiment, setting is: e.g., θ = 60°, L1 = 10m, L2 = 20m as shown in FIG. 12.

For example, if the angle of view α of the main monitor 11 is equal to 60°, i.e. equal to the standard angle of view θ, L = H is given by equation (1). Accordingly, the first polygon set 34 is selected when H < 10(m); the second polygon set 35 is selected when 10(m)≤ H <20(m); and the third polygon set 36 is selected when 20(m) ≤ H.

Further, if the angle of view α of the auxiliary monitor 25 is equal to 10°, the first polygon set 34 is selected when H < 65.99(m); the second polygon set 35 is selected when 65.99(m)≤H<131.98(m); and the third polygon set 36 is selected when 131.98(m) ≤ H in accordance with equation (1) as shown in FIG. 12.

In this embodiment, in the case that portions of the game image set in the virtual 3D space within the ranges of different angles of view are displayed on the main monitor 11 and the auxiliary monitor 25, the polygon sets used to display the model are selected based on the corrected value L of the distance H calculated according to the angle of view α in accordance with equation (1). Thus, suitable polygon sets corresponding to the distance can be easily selected for both monitors 11 and 25. As a result, suitable images can be realistically displayed on the monitors 11 and 25.

Referring back to FIG. 6, the change instructing means 58 has a function of instructing a change of the display mode of the enemy character on the auxiliary monitor 25 to the different display modes described above. In the game program stored in the ROM 31, this video game is comprised of a plurality of game stages, in each of which the display mode of the enemy character on the auxiliary monitor 25 is set beforehand at a usual mode as shown in FIG. 4 or at a see-through mode as shown in FIG. 10 or 11. Upon entering a game stage in which the see-through mode is set as the game progresses, the above instruction is given by the change instructing means 58.

As shown in phantom line in FIG. 6, there may be provided an operable member 72 including, for example, an operation switch provided on the simulated gun 20 and adapted to send an operation signal to the control unit 33 upon being operated. The change instructing means 58 may give the above instruction in accordance with the operation signal from the operable member 72. In FIG. 6, the main display control device 61 may have a function of generating a command to display a specified character on the main monitor 11, and the change instructing means 58 may give an instruction to change the display mode of the enemy character on the auxiliary monitor 25 to a different display mode when the hit judging means 53 judges that the simulated bullet fired from the simulated gun 20 (see FIG. 1) hit the specified character. In these cases, the game player can change the display mode of the enemy character to a different one in a desired game scene, which makes the game more interesting.

As described above, the main display control device 61 of the display control means 59 has a function of generating a command to display a portion of the game image set in the virtual 3D space within a range of a specified angle of view from a specified viewing point on the main monitor 11 depending on the progress of the game.

The auxiliary display control device 62 has a function of generating a command to display a portion of the game image displayed on the main monitor 11 which portion includes a part aimed at by the simulated gun 20 and is located within a range of a specified angle of view smaller than the one used in the main display control device 61.

The main and auxiliary display control devices 61, 62 generate various other commands for the display, including a command to display the simulated bullet generated by the bullet control means 52 and a command for the screen display showing a success of shooting in response to the hit judgment made by the hit judging means 53 by, for example, causing the model hit by the simulated bullet, e.g. the enemy character to fall backward or disappear from the game screen.

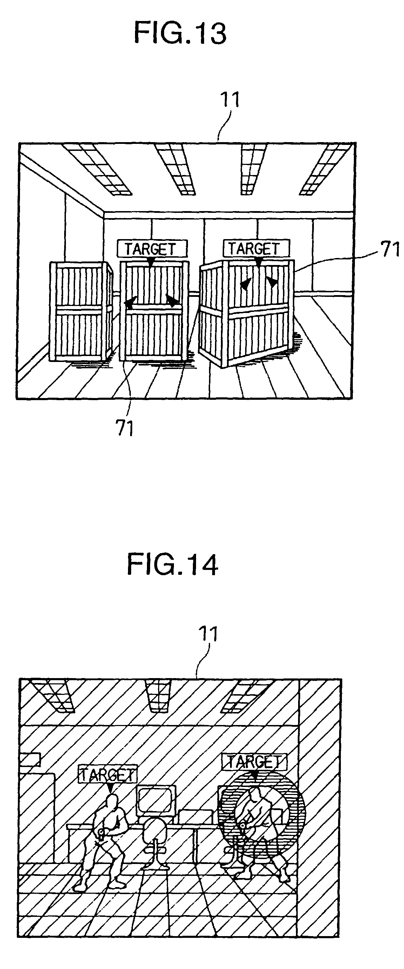

The change display control device 63 has a function of generating a command to display the enemy character on the auxiliary monitor 25 in the aforementioned different display mode as shown in FIG. 10 or 11 upon the instruction by the change instructing means 58. FIGS. 13 and 14 are diagrams showing examples of the display scenes on the main monitor 11 when the instruction is given from the change instructing means 58.

FIG. 13 shows a state where enemy characters (indicated by "TARGET" in FIG. 13) cannot be seen with sight being blocked by obstacles 71. Even in this state, if the instruction is given from the change instruction means 58, the change display control means 63, for example, causes the enemy character P3 to be displayed as a simulated thermographical image on the auxiliary monitor 25 as shown in FIG. 10, so that the enemy character P3 can be easily visually recognizable.

FIG. 14 shows a state where enemy characters (indicated by "TARGET" in FIG. 14) are difficult to see with sight being blocked by the darkness or smoke (indicated by hatching in FIG. 14). Even in this state, if the instruction is given from the change instruction means 58, the change display control means 63, for example, causes the enemy character P4 to be displayed as a simulated skeleton image on the auxiliary monitor 25 as shown in FIG. 11, so that the enemy character P4 can be easily visually recognizable.

In this embodiment, even if it is difficult or impossible to see the enemy character on the main monitor 11, the change display control means 63 causes the enemy character to be displayed in the different display mode on the auxiliary monitor 25 when the instruction is given from the change instructing means 58. Accordingly, the enemy character can be easily visually recognizable. This enables the game player to shoot the enemy character in such a case, making the shooting video game more interesting and exciting. Further, unlike the simple shooting video game for shooting enemy characters, a variety of images including darkness and obstacles can be displayed on the main monitor 11, thereby making the game more enjoyable.

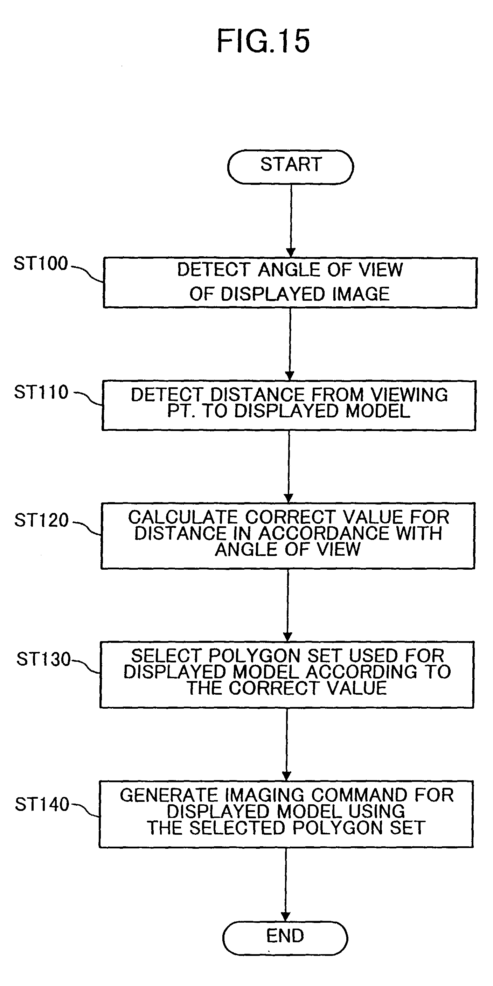

Next, a procedure of selecting the polygon set is described with reference to a flow chart of FIG. 15.

First, an angle of view of an image being displayed is detected (Step ST100), a distance from a viewing point to a displayed model is detected (Step ST110) and a corrected value of the distance corresponding to the angle of view is calculated by equation (1) (Step ST120). A polygon set used for the displayed model is selected based on the corrected value (Step ST130), and an imaging command for the displayed model is generated using the selected polygon set (Step ST140).

This operation procedure is carried out frame by frame for both the main monitor 11 and the auxiliary monitor 25, and Steps ST110 to ST140 are performed for all models displayed on the respective monitors 11, 25.

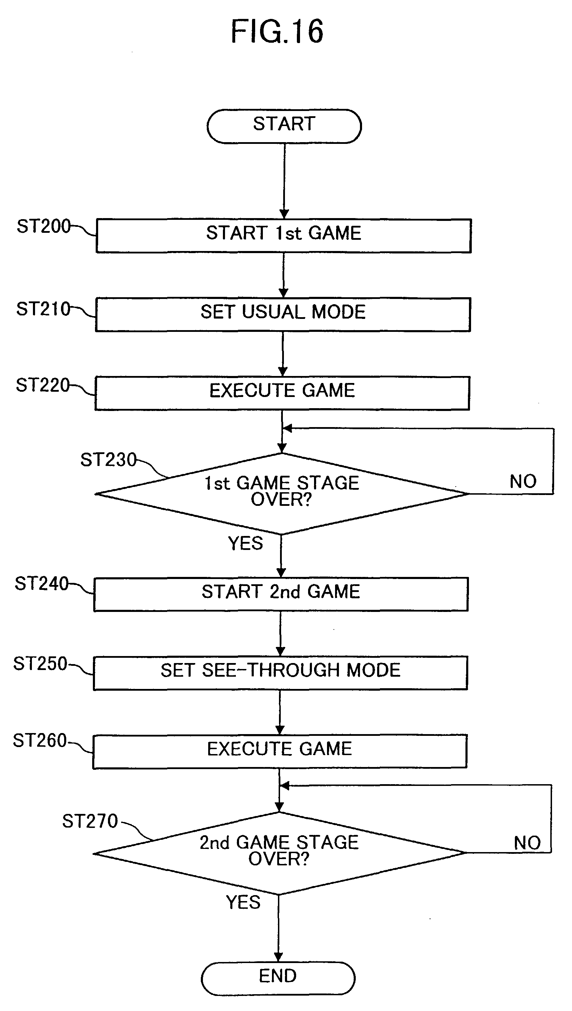

Next, an instruction procedure by the change instructing means 58 is described with reference to a flow chart of FIG. 16.

When the video game system is turned on, a first game stage is started (Step ST200) after a specified procedure including the display of a demonstration screen and an initialization screen is carried out (not shown). The usual mode is first set (Step ST210). Thus, no instruction is given from the change instructing means 58 in the first game stage. Subsequently, the game in the first game stage is performed (Step ST220) until the end of the first game stage (NO in Step ST230), proceeding to the next stage.

Upon the end of the first game stage (YES in Step St230), a second game stage is started next (Step ST240). First, an instruction is given from the change instructing means 58 to set the see-through mode (Step ST250). Accordingly, in the second stage, when an image as shown in FIG. 13 or 14 is displayed in the second game stage, the enemy character is displayed in a different display mode on the auxiliary monitor 25 as shown in FIG. 10 or 11.

The game of the second game stage is continued (Step ST260) until the end of the second game stage (NO in Step ST270). Upon the end of the second game stage (YES in Step ST270), a third game stage or the like is started (not shown).

The present invention is not limited to the foregoing embodiment, and may be embodied as follows.

(1) Scenes in which the instruction by the change instructing means 58 to change display mode to the one as shown in FIG. 10 or 11 is effective are not limited to the cases of FIGS. 13 and 14. For instance, there can be considered a case of finding a hidden enemy character who obscures himself so as to be lost to view in the background by wearing a camouflage clothing and a case of finding an enemy character who hides himself in the water or ground so that he cannot be seen with the naked eye.

(2) The case where the display mode of displaying the simulated thermographical image as shown in FIG. 10 is effective is not limited to the case of finding the enemy character who is a human character as in the foregoing embodiment. For instance, there can be considered a case of finding a car, in which an enemy character hides himself and which drove into a car park where quite a few cars are parked, by means of a simulated engine heat.

(3) The case where the display mode of displaying the simulated skeleton image as shown in FIG. 11 is effective is not limited to the case as in the foregoing embodiment. For instance, there can be considered a case of finding an enemy character concealingly possessing a simulated weapon (metal) from quite a few human characters.

(4) The ROM 31 as a readable storage medium may be a portable storage medium such as a CD-ROM, a DVD-ROM or like optical disk, a memory card or a floppy disk. This enables the game program to be easily exchanged and renewed.

As described above, the inventive shooting video game system for shooting an enemy character displayed on the main monitor by the simulated gun from a position facing the main monitor is provided with the main display control means for displaying a portion of a game image set in the virtual 3D space and comprised of models including the enemy character within a range of a specified angle of view on the main monitor; the auxiliary monitor provided in the gunsight of the simulated gun, the auxiliary display control means for displaying a portion of the game image including a part at which the simulated gun is aimed within a range of an angle of view smaller than the specified angle of view on the auxiliary monitor; the display mode storage means for storing at least one display mode different from the usual display mode used for the display on the main monitor as a display mode for the enemy character, the change instructing means for instructing a change of the display mode of the enemy character on the auxiliary monitor to the different display mode, and the changed display control means for displaying the enemy character in the different display mode on the auxiliary monitor when an instruction is given by the change instructing means.

With this construction, the portion of the game image set in the virtual 3D space and comprised of the models including the enemy character within the range of the specified angle of view is displayed on the main monitor, and the portion of the game image displayed on the main monitor including the part at which the simulated gun is aimed within the range of the angle of view smaller than the specified angle of view is displayed on the auxiliary monitor. Although the enemy character is displayed in the usual display mode on the main monitor, it is displayed in the different display mode on the auxiliary monitor when the instruction is given by the change instructing means. Thus, the enemy character is displayed in the different display modes on the two monitors, enabling the display of a variety of game images.

The display mode storage means may store simulated thermographical images of enemy characters as the different display mode. With such a display mode storage means, although the enemy character is displayed in the usual display mode on the main monitor, it is displayed in the display mode of displaying the simulated thermographical image on the auxiliary monitor when the instruction is given by the change instructing means. For example, if the enemy character is a simulated car used by a human character to be shot, a part of the simulated car corresponding to its engine is displayed as a thermographical image. Thus, a variety of game images can be displayed.

The display mode storage means may store simulated skeleton images of the enemy characters as the different display mode. With such a display mode storage means, although the enemy character is displayed in the usual display mode on the main monitor, they are displayed in the display mode of displaying the simulated skeleton image, which looks as if it would have obtained by an X-ray testing apparatus, on the auxiliary monitor when the instruction is given by the change instructing means if the enemy character is an animal character including a human character. Thus, a variety of game images can be displayed.

If the enemy character is a human character, it is displayed in the usual display mode on the main monitor, but is displayed in the different display mode of displaying the simulated thermographical image or simulated skeleton image, which looks as if it would have obtained by scanning a person by a thermograph or an X-ray testing apparatus, on the auxiliary monitor. Thus, a variety of game images can be displayed.

The change instructing means may give the instruction in scenes set in advance in the game content. With this construction, the enemy character is displayed in the different display mode on the auxiliary monitor, for example, in scenes which require the different display mode in the game content. Thus, the enemy character can be precisely displayed in the different display mode.

The operable member may be provided on the simulated gun, and the change instructing means may give the instruction when the operable member is operated. With this construction, the enemy character is displayed in the different display mode in the game player's desired scenes, thereby making the game more interesting.

The main display control means may display a specified character on the main monitor, and the change instructing means may give the instruction when the simulated bullet fired from the simulated gun hits the specified character. With this construction, the enemy character is displayed in the different display mode in the game player's desired scenes, thereby making the game more interesting.

The changed display control means may display the enemy character in the different display mode stored in the display mode storage means on the auxiliary monitor when the instruction is given by the change instruction means in the case that the enemy character is not seen in the game image displayed on the main monitor by being blocked by other model(s).

With this construction, the enemy character is displayed in the different display mode on the auxiliary monitor in the case that the enemy character is not seen in the game image displayed on the main monitor by being blocked by the other model(s). Accordingly, even if the enemy character cannot be seen on the main monitor, it can be shot by viewing the auxiliary monitor, making the game more interesting.

The inventive image displaying method changes the display mode of displaying the enemy character, which is a human character, on the auxiliary monitor provided in the gunsight of the simulated gun to the display mode of displaying the simulated thermographical image of the human character in the shooting video game for shooting the enemy character displayed on the main monitor by the simulated gun from a position facing the main monitor.

According to this method, by changing the display mode of the enemy character displayed on the auxiliary monitor provided in the gunsight of the simulated gun to the display mode of displaying the simulated thermographical image of the enemy character, the enemy character is displayed in the different display modes on the main monitor and the auxiliary monitor and is displayed in the display mode of displaying the simulated thermographical image which looks as if it would have been obtained by photographing with a thermography (a device that can detect an image of an object by a temperature thereof which is different from its surrounding). Thus, a variety of game images can be displayed.

The inventive image displaying method changes the display mode of displaying the enemy character, which is a human character, on the auxiliary monitor provided in the gunsight of the simulated gun to the display mode of displaying the simulated skeleton image of the human character in the shooting video game for shooting the enemy character displayed on the main monitor by the simulated gun from a position facing the main monitor.

According to this method, by changing the display mode of the enemy character displayed on the auxiliary monitor provided in the gunsight of the simulated gun to the display mode of displaying the simulated skeleton image of the enemy character, the enemy character is displayed in the different display modes on the main monitor and the auxiliary monitor and is displayed in the display mode of displaying the simulated skeleton image which looks as if it would have been obtained by scanning a person by an X-ray testing apparatus. Thus, a variety of game images can be displayed.

This application is based on Japanese application serial no. 11-270525 filed in Japan on September 24, 1999, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A shooting video game system for shooting an enemy character displayed on a main monitor by a simulated gun from a position facing the main monitor, said shooting video game system comprising:

   main display control means for displaying a game image set in a virtual 3D space within a range of a specified angle of view on the main monitor, said game image comprised of models including an enemy character;

   auxiliary monitor provided in a gunsight of the simulated gun;

   auxiliary display control means for displaying on the auxiliary monitor a portion of the game image including a part at which the simulated gun is aimed within a range of an angle of view smaller than the specified angle of view;

   display mode storage means for storing at least one display mode different from a usual display mode used for the display on the main monitor as a display mode for the enemy character;

   change instructing means for instructing a change of the display mode of the enemy character on the auxiliary monitor to the different display mode; and

   change display control means for displaying the enemy character in the different display mode on the auxiliary monitor when an instruction is given by the change instructing means.

2. A shooting video game system according to claim 1, characterized in that the display mode storage means stores a simulated thermographical image of enemy character as the different display mode.

3. A shooting video game system according to claim 1, characterized in that the display mode storage means stores a simulated skeleton image of the enemy character as the different display mode.

4. A shooting video game system according to claim 2 or claim 3, characterized in that the enemy character is a human character.

5. A shooting video game system according to any one of claims 1 through 4, characterized in that the change instructing means gives the instruction in scenes set in advance in a game content.

6. A shooting video game system according to any one of claims 1 through 4, characterized in that an operable member is provided on the simulated gun and the change instructing means gives the instruction when the operable member is operated.

7. A shooting video game system according to any one of claims 1 through 4, characterized in that the main display control means displays a specified character on the main monitor, and the change instructing means gives the instruction when a simulated bullet fired from the simulated gun hits the specified character.

**8.** A shooting video game system according to any one of claims 1 through 4, characterized in that the changed display control means displays an enemy character in the different display mode stored in the display mode storage means on the auxiliary monitor when the instruction is given by the change instruction means in the case that the enemy character is not seen in the game image displayed on the main monitor by being blocked by other model.

**9.** An image displaying method employed in a shooting video game for shooting an enemy character displayed on a main monitor by a simulated gun from a position facing the main monitor, said method comprising the step of:

changing a display mode of the enemy character on an auxiliary monitor provided in a gunsight of the simulated gun to a display mode displaying a simulated thermographical image corresponding to the enemy character.

**10.** An image displaying method employed in a shooting video game for shooting an enemy character displayed on a main monitor by a simulated gun from a position facing the main monitor, said method comprising the step of:

changing a display mode of the enemy character on an auxiliary monitor provided in a gunsight of the simulated gun to a display mode displaying a simulated skeleton image corresponding to the enemy character.

# FIG.1

# FIG.2A

# FIG.2B

# FIG.3

# FIG.4

25

P1

# FIG.5

# FIG.6

START SWITCH ⌐13

COIN DECTION UNIT ⌐16

MAIN MONITOR 11

MICRO SWITCH 24

AUX MONITOR 25

AIMING DIRECTION DETECTOR 27

RAM 32

DISPLAY AREA (FRAME BUFFERS)

DISPLAY AREA (FRAME BUFFERS)

NON DISPLAY AREA

OPERABLE MEMBER 72

CONTROL UNIT 33

GAME CONTROLLER 41

POS CALC MEANS 51

BULLET CONT MEANS 52

HIT JUDGE MEANS 53

VIEW ANGLE DETECT MEANS 54

DISTANCE DETECT MEANS 55

CORRECT MEANS 56

POLYGON SELECTION MEANS 57

CORRECT INSTRUCT MEANS 58

DISPLAY CONTROL MEANS 59

MAIN DISPLAY CONT MEANS 61

AUX DISPLAY CONT MEANS 62

CORRECTION DISPLAY CONT MEANS 63

SIG PROCESS UNIT 42

IMAGING UNIT 43

ROM 31
(POLYGON STORAGE MEANS、DISPLAY MODE STORAGE MEANS)

GAME PROGRAM

POLYGON DATA

TEXTURE DATA

EP 1 086 729 A2

# FIG.7

# FIG.8

# FIG.9

# FIG.10

# FIG.11

# FIG.12

EP 1 086 729 A2

# FIG.13

11

71

71

# FIG.14

11

# FIG.15

START

ST100 — DETECT ANGLE OF VIEW
OF DISPLAYED IMAGE

ST110 — DETECT DISTANCE FROM VIEWING
PT. TO DISPLAYED MODEL

ST120 — CALCULATE CORRECT VALUE FOR
DISTANCE IN ACCORDANCE WITH
ANGLE OF VIEW

ST130 — SELECT POLYGON SET USED FOR
DISPLAYED MODEL ACCORDING TO
THE CORRECT VALUE

ST140 — GENERATE IMAGING COMMAND FOR
DISPLAYED MODEL USING
THE SELECTED POLYGON SET

END

# FIG.16

```
                    ┌─────────────┐
                    │    START    │
                    └──────┬──────┘
                           │
                           ▼
ST200 ──┐      ┌────────────────────────┐
        └──────│     START 1st GAME     │
               └───────────┬────────────┘
                           │
                           ▼
ST210 ──┐      ┌────────────────────────┐
        └──────│     SET USUAL MODE     │
               └───────────┬────────────┘
                           │
                           ▼
ST220 ──┐      ┌────────────────────────┐
        └──────│     EXECUTE GAME       │
               └───────────┬────────────┘
                           │            ◄───────────┐
                           ▼                        │
ST230 ──┐        ◇◇◇◇◇◇◇◇◇◇◇◇◇◇◇◇                   │
        └──────◇  1st GAME STAGE  ◇─── NO ──────────┘
                ◇      OVER?       ◇
                 ◇◇◇◇◇◇◇◇◇◇◇◇◇◇◇◇
                        │ YES
                        ▼
ST240 ──┐      ┌────────────────────────┐
        └──────│     START 2nd GAME     │
               └───────────┬────────────┘
                           │
                           ▼
ST250 ──┐      ┌────────────────────────┐
        └──────│   SET SEE-THROUGH MODE │
               └───────────┬────────────┘
                           │
                           ▼
ST260 ──┐      ┌────────────────────────┐
        └──────│     EXECUTE GAME       │
               └───────────┬────────────┘
                           │            ◄───────────┐
                           ▼                        │
ST270 ──┐        ◇◇◇◇◇◇◇◇◇◇◇◇◇◇◇◇                   │
        └──────◇  2nd GAME STAGE  ◇─── NO ──────────┘
                ◇      OVER?       ◇
                 ◇◇◇◇◇◇◇◇◇◇◇◇◇◇◇◇
                        │ YES
                        ▼
                 ┌─────────────┐
                 │     END     │
                 └─────────────┘
```